# EUROPEAN PATENT APPLICATION

(11) **EP 4 675 460 A1**
(43) Date of publication of application: **07.01.2026**
(21) Application number: 23931711.8
(22) Date of filing: 31.08.2023
(51) Int. Cl.: G06F 16/9535, G06F 16/9537, G06Q 10/083

(54) **CONNECTING FLIGHT CONSTRUCTION METHOD AND APPARATUS, ELECTRONIC DEVICE, AND STORAGE MEDIUM**

(30) Priority: 04.04.2023 CN 202310355586
(71) Applicant: Travelsky Technology Limited, Beijing 101318 (CN)
(72) Inventor: LI, Jiangtao, Beijing 101318 (CN); YANG, Yongkai, Beijing 101318 (CN); ZHU, Honglin, Beijing 101318 (CN); LI, Yang, Beijing 101318 (CN); MA, Shuyan, Beijing 101318 (CN); HU, Bianxiang, Beijing 101318 (CN); TIAN, Song, Beijing 101318 (CN)
(74) Representative: Penza, Giancarlo
(86) International application number: PCT/CN2023/116083
(87) International publication number: WO 2024/207663

(57) **Abstract**

Provided are a method and apparatus for constructing a through flight, an electronic device and a storage medium. In the method for constructing a through flight, through flight information issued by each airline is acquired, where the through flight information includes a through flight route information and a through flight code sharing relation. Then, data of the through flight information is verified to obtain valid through flight information. Then, direct flight information is searched out from a pre-constructed direct flight information base based on the valid through flight information. Finally, the through flight is constructed based on the direct flight information, and stored into a through flight information base. Thus, according to the method of the disclosure, the direct flight information can be searched out according to the acquired through flight information issued by each airline, thereby constructing the through flight. The through flight can improve accessibility between existing airports, give full play to a radiation effect of a hub airport, and achieve a service mode of "trunk and branch communication and full network connection".

## Description

The disclosure claims the priority to Chinese Patent Application No. 202310355586.2, filed with the Chinese Patent Office on April 04, 2023 and entitled "Method and apparatus for constructing through flight, electronic device and storage medium", which is incorporated in its entirety herein by reference.

### Technical Field

The disclosure relates to the technical field of data processing, and in particular to a method and apparatus for constructing a through flight, an electronic device and a storage medium.

### Background

New products have been innovated and launched by airlines ceaselessly to expand route networks and increase network revenue, owing to improvement in a technological capability and growth of a business capability of airlines in a field of airline ticket sales.

However, the through flight solution in prior art typically offers insufficient transit service products with low coordination efficiency, resulting in poor passenger experience.

### Summary

In view of this, the disclosure provides a method and apparatus for constructing a through flight, an electronic device and a storage medium, so as to solve the problem that the prior art typically offers insufficient transit service products with low coordination efficiency, resulting in poor passenger experience.

In order to achieve the above objective, the disclosure provides the following technical solution:
a first aspect of the disclosure discloses a method for constructing a through flight. The method includes:
through flight information issued by each airline is acquired, where the through flight information includes through flight route information and a through flight code sharing relation;
data of the through flight information is verified to obtain valid through flight information;
direct flight information is searched out from a pre-constructed direct flight information base based on the valid through flight information; and
the through flight is constructed based on the direct flight information, and stored into a through flight information base.

Optionally, after the step that data of the through flight information is verified to obtain valid through flight information, the method further includes:
the valid through flight information is stored into a database.

Optionally, after the step that the through flight is constructed based on the direct flight information, and stored into a through flight information base, the method further includes:
whether a flight query request conforms to a specification is verified under the condition that the flight query request sent by a user is received;
flight information is searched out based on the flight query request and a query result is generated under the condition that the flight query request conforms to the specification; and
a flight query flow is ended under the condition that the flight query request does not conform to the specification.

Optionally, after the step that flight information is searched out based on the flight query request and a query result is generated, the method further includes:
the query result is sorted according to a preset rule to obtain a sorted query result; and the sorted query result is sent to the user.

A second aspect of the disclosure discloses an apparatus for constructing a through flight. The apparatus includes:
an acquisition unit, configured to acquire through flight information issued by each airline, where the through flight information includes through flight route information and a through flight code sharing relation;
a first verification unit, configured to verify data of the through flight information to obtain valid through flight information;
a first search unit, configured to search out, based on the valid through flight information, direct flight information from a pre-constructed direct flight information base; and
a construction unit, configured to construct the through flight based on the direct flight information, and store the through flight into a through flight information base.

Optionally, the apparatus further includes:
a storage unit, configured to store the valid through flight information into a database.

Optionally, the apparatus further includes:
a second verification unit, configured to verify whether a flight query request conforms to a specification under the condition that the flight query request sent by a user is received;
a second search unit, configured to search out flight information based on the flight query request and generate a query result under the condition that the flight query request conforms to the specification; and
an ending unit, configured to end a flight query flow under the condition that the flight query request does not conform to the specification.

Optionally, the apparatus further includes:
a sorting unit, configured to sort the query result according to a preset rule to obtain a sorted query result; and
a sending unit, configured to send the sorted query result to the user.

A third aspect of the disclosure discloses an electronic device. The electronic device includes:
one or more processors; and
a storage apparatus storing one or more programs, where
the one or more processors implement the method of any one of the first aspect of the disclosure when the one or more programs are executed by the one or more processors.

A fourth aspect of the disclosure discloses a computer storage medium. The computer storage medium stores a computer program, and the computer program implements the method of any one of the first aspect of the disclosure when executed by a processor.

It can be seen from the above technical solution that in the method for constructing a through flight according to the disclosure, the through flight information issued by each airline is acquired, where the through flight information includes the through flight route information and the through flight code sharing relation. Then, the data of the through flight information is verified to obtain the valid through flight information. Then, the direct flight information is searched out from the pre-constructed direct flight information base based on the valid through flight information. Finally, the through flight is constructed based on the direct flight information, and stored into the through flight information base. Thus, according to the method of the disclosure, the direct flight information can be searched out according to the acquired through flight information issued by each airline, thereby constructing the through flight. The through flight may improve accessibility between existing airports, give full play to a radiation effect of a hub airport, and achieve a service mode of "trunk and branch communication and full network connection". The problem that the prior art typically offers insufficient transit service products with low coordination efficiency, resulting in poor passenger experience is solved, and degree of satisfaction and sense of obtainment of passengers on a transit flight service are improved.

The contents described above are merely an overview of the technical solution of the disclosure. In order to more clearly understand the technical means of the disclosure, the disclosure can be implemented according to the contents of the description, and in order to make the above and other objectives, features and advantages of the disclosure more obvious and understandable, particular embodiments of the disclosure will be exemplarily described below.

### Brief Description of the Drawings

The above and other features, advantages, and aspects of each example of the disclosure will become more obvious in combination with the accompanying drawings and with reference to the following particular embodiments. Throughout the accompanying drawings, the same or similar reference numerals denote the same or similar elements. It should be understood that the accompanying drawings are schematic, and components and elements are not necessarily drawn to the actual scale.
Fig. 1 is a flow diagram of a method for constructing a through flight disclosed in an example of the disclosure;
Fig. 2 is a schematic diagram showing flight number information disclosed in another example of the disclosure;
Fig. 3 is a schematic diagram showing flight query disclosed in another example of the disclosure;
Fig. 4 is a picture showing a through flight disclosed in another example of the disclosure;
Fig. 5 is a picture showing another through flight disclosed in another example of the disclosure;
Fig. 6 is a schematic diagram of an apparatus for constructing a through flight disclosed in another example of the disclosure; and
Fig. 7 is a schematic diagram of an electronic device disclosed in another example of the disclosure.

### Detailed Description of the Embodiments

The examples of the disclosure will be described in more detail below with reference to the accompanying drawings. Although some examples of the disclosure are shown in the accompanying drawings, it should be understood that the disclosure can be implemented in various forms and should not be construed to be limited to the examples described herein. On the contrary, these examples are provided for more thorough and complete understanding of the disclosure. It should be understood that the accompanying drawings and examples of the disclosure are merely for illustrative purposes and are not intended to limit the scope of protection of the disclosure.

The terms "comprise" and "include" and their variations used herein are open-ended, i.e. "comprise, but not limited to" and "include, but not limited to". The term "based on" is "at least partially based on". The term "an example" denotes "at least one example"; the term "another example" denotes "at least one another example"; and the term "some examples" denotes "at least some examples". Related definitions of other terms will be provided in the following description.

It should be noted that the concepts such as "first" and "second" mentioned in the disclosure are merely intended to distinguish different apparatuses, modules or units, and are not intended to define the order or interdependence of the functions executed by these apparatuses, modules or units. [ordinal numeral].

It should be noted that the modification of "a", "an", "the" and "plurality" mentioned in the disclosure is illustrative rather than limiting, and those skilled in the art should understand that "a", "an", "the" and "plurality" should be understood as "one or more" unless explicitly stated otherwise in the context. [singular and plural].

It may be seen from the background that the through flight solution in the prior art typically offers insufficient transit service products with low coordination efficiency, resulting in poor passenger experience.

In view of this, the disclosure provides a method and apparatus for constructing a through flight, an electronic device and a storage medium, so as to solve the problem that the prior art typically offers insufficient transit service products with low coordination efficiency, resulting in poor passenger experience.

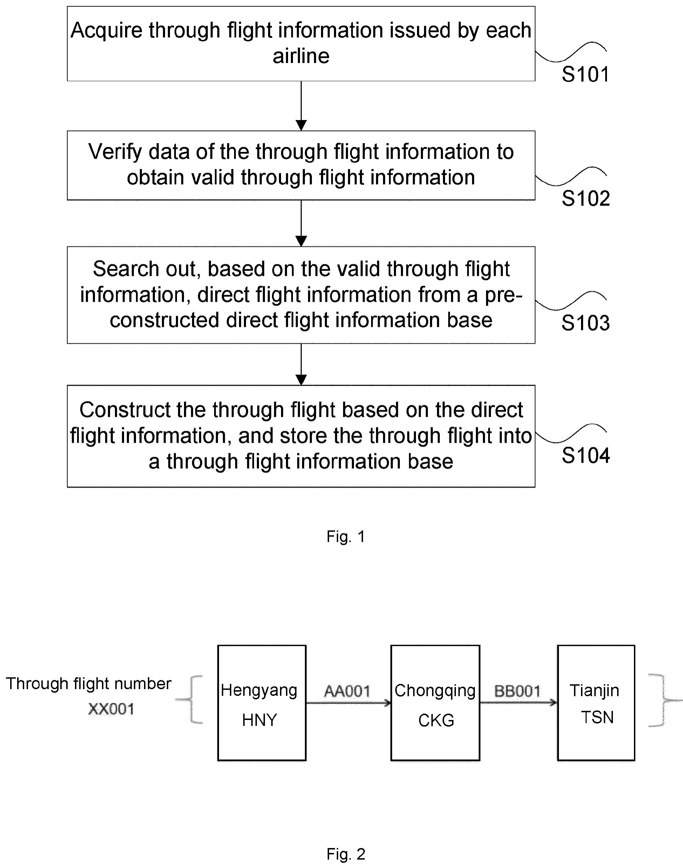

A method for constructing a through flight is provided in an example of the disclosure. As shown in Fig. 1, the method specifically includes:
S101, through flight information issued by each airline is acquired, where the through flight information includes through flight route information and a through flight code sharing relation.

It should be noted that the through flight information issued by each airline is acquired firstly, where the through flight information includes the through flight route information and the through flight code sharing relation. The through flight information is issued by means of a through flight management system by an airline business person logging in to the through flight management system by means of an authorized account. The through flight route information mainly includes market information and related transit information of operation of the through flight. The through flight code sharing relation refers to a way that a flight of a carrier airline may be sold by means of the carrier airline or other flight numbers of other airlines. For example, a flight AA101 exists, and a code sharing flight BB101 further exists. AA101 and BB101 are sold as two flights, but BB101 may indicate that a flight actually carried is AA101. For passengers, whether the passengers buy AA101 or BB101, the passengers are on the same plane.

It should be further noted that the through flight refers to an innovation mode in which a virtual flight number is used as a market flight, and different segments of the through flight are carried by a plurality of different airlines by setting up the flight code sharing relation, so as to achieve through flight intermodal transportation.

S102, data of the through flight information is verified to obtain valid through flight information.

It should be noted that integrity and legitimacy of the through flight information are verified after the through flight information is acquired. Mainly, airline information and transit airport information involved in the through flight route information are checked and the through flight code sharing relation is verified to obtain the valid through flight information.

Optionally, in another example of the disclosure, after S102 is executed, the method may further include:
the valid through flight information is stored into a database.

It should be noted that the valid through flight information is stored into the database after the valid through flight information is obtained, so as to subsequently query and process the data.

S103, direct flight information is searched out from a pre-constructed direct flight information base based on the valid through flight information.

It should be noted that the pre-constructed direct flight information base is queried according to the through flight code sharing relation after the valid through flight information is obtained, so as to search out carrier direct flight information corresponding to different flight sections of the through flight.

S104, the through flight is constructed based on the direct flight information, and stored into a through flight information base.

It should be noted that a date, connection time, etc. of the carrier direct flight information is verified in a combined manner. If a verification condition is not satisfied in a connection date and connection time between a plurality of flights constituting the through flight, the through flight may not be generated. For example, the through flight AA101 is set, a first segment is BB101, a second segment is CC101, but operation dates of the two flights BB101 and CC101 do not intersect, or connection time of the two flights is too short, the passengers may not transmit, and the final through flight may also not be generated. A result of the through flight is constructed according to the direct flight information that passes verification, and stored into the through flight information base.

In the method for constructing a through flight according to the example of the disclosure, the through flight information issued by each airline is acquired, where the through flight information includes the through flight route information and the through flight code sharing relation. Then, the data of the through flight information is verified to obtain the valid through flight information. Then, the direct flight information is searched out from the pre-constructed direct flight information base based on the valid through flight information. Finally, the through flight is constructed based on the direct flight information, and stored into the through flight information base. Thus, according to the method of the disclosure, the direct flight information can be searched out according to the acquired through flight information issued by each airline, thereby constructing the through flight. The through flight may improve accessibility between existing airports, give full play to a radiation effect of a hub airport, and achieve a service mode of "trunk and branch communication and full network connection". The problem that the prior art typically offers insufficient transit service productswith low coordination efficiency, resulting in poor passenger experience is solved, and degree of satisfaction and sense of obtainment of passengers on a transit flight service are improved.

Optionally, in another example of the disclosure, after S104 is executed, the method may further include:
whether a flight query request conforms to a specification is verified under the condition that the flight query request sent by a user is received;
flight information is searched out based on the flight query request and a query result is generated under the condition that the flight query request conforms to the specification; and
a flight query flow is ended under the condition that the flight query request does not conform to the specification.

It should be noted that the user may log in to an airline official website, an airline application (APP) or an online travel agency (OTA) website to send the flight query request, and the request is transmitted to a flight query engine. Field information mainly included in the request includes information of an origin, a destination, an earliest travel date, a preferred airline, etc. Whether the flight query request conforms to a preset query specification is verified under the condition that the flight query request sent by the user is received. The query specification, such as specifications such as a format and an authority, is set according to actual conditions. The flight information is searched out based on the flight query request and the query result is generated under the condition that the flight query request conforms to the specification; and the flight query flow is ended under the condition that the flight query request does not satisfy the specification.

Optionally, in another example of the disclosure, after the step that flight information is searched out based on the flight query request and a query result is generated under the condition that the flight query request conforms to the specification is executed, the method may further include:
the query result is sorted according to a preset rule to obtain a sorted query result; and
the sorted query result is sent to the user.

It should be noted that the flight query engine firstly sorts direct flight, through flight, and connecting flight results queried after the flight information is searched out based on the flight query request and the query result is generated. The direct flight, the through flight and the connecting flight are sequentially sorted to obtain a sorted query result. In order to highlight a result of the through flight, the result of the through flight may be marked specially. Then, the sorted query result is formed into a formatted message, and the formatted message returns to an upstream system. The upstream system analyzes the message and then sends the sorted query result to the user.

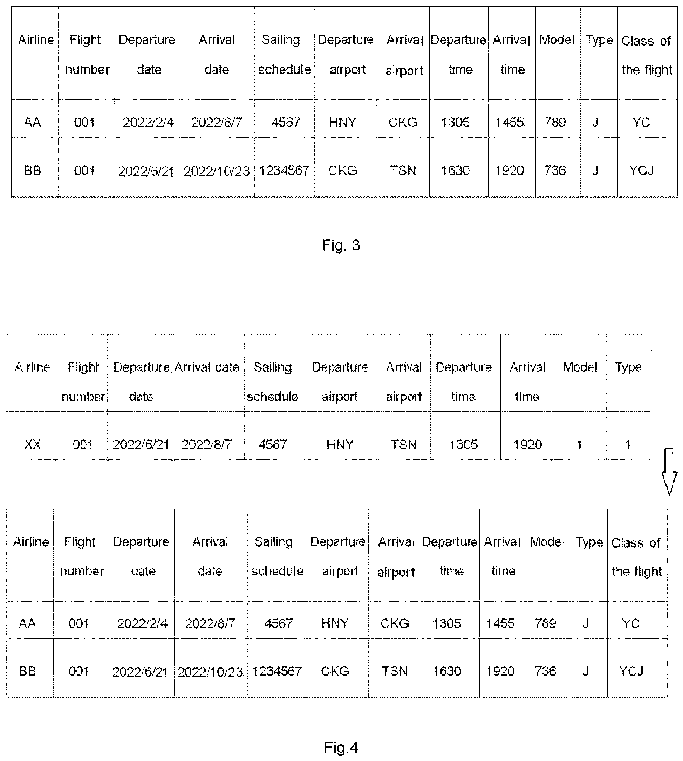

For convenience of understanding, issuance of a through light from Hengyang to Tianjin is taken as an example in the example. Firstly, a through flight route is issued: Hengyang (HNY, Hengyang Nanyue Airport) arrives at Tianjin (TSN, Tianjin Binhai International Airport) via Chongqing (CKG, Chongqing Jiangbei International Airport). Compliance of an origin, a destination and a transit airport of the flight route is verified, and whether the origin, the destination and the transit airport of the flight route are valid city airport information is verified. Then, through flight information is issued. Firstly, a flight number XX001 of the through flight is defined, and then carrier flight number information of each segment of the through flight route is sequentially set. A carrier airline may be the same as or different from a market airline. For example, a carrier flight of a segment HNY-CKG is set as AA001, and a carrier flight of a segment CKG-TSN is set as BB001 (XX,AA and BB are airline two-letter codes), as shown in Fig. 2. Whether the through flight information is complete and whether valid carrier flight information is specified for each segment are verified after setting is completed. According to a query request HNY-TSN, through flight route information HNY-CKG-TSN and through flight number information XX001 are retrieved, an HNY-CKG carrier flight is AA001, and a CKG-TSN carrier flight is BB001. The carrier direct flight information of each segment in the through flight route is read. The direct flight information base is retrieved, and flight attribute information of the flights AA001 and BB001 is queried. Flight attributes mainly include basic information of a departure airport, an arrival airport, a departure city, an arrival city, departure time, arrival time, a model, a terminal building, an aircraft type, a class list of the flight, etc., specifically as shown in Fig. 3. According to the acquired carrier direct flight information, flight information of a date, a schedule, connection time, etc. is verified and matched, and valid through flight information available for query is generated and stored. For example, an intersection {20220621, 20220807} of date intersections {20220204, 20220807} and {20220621, 20221023} of the flight AA001 and the flight BB001 is verified and calculated, and an operation schedule is {4,5,6,7}. Whether the connection time of the flights AA001 and BB001 may satisfy a connection time requirement of a CKG airport is verified. The connection time of the flights AA001 and BB001 is 1 hour and 35 minutes, and satisfies the connection time of the CKG airport of 90 minutes. Through flight result information XX001 is stored, and an index key=HNYTSN is created according to departure city and destination city information.

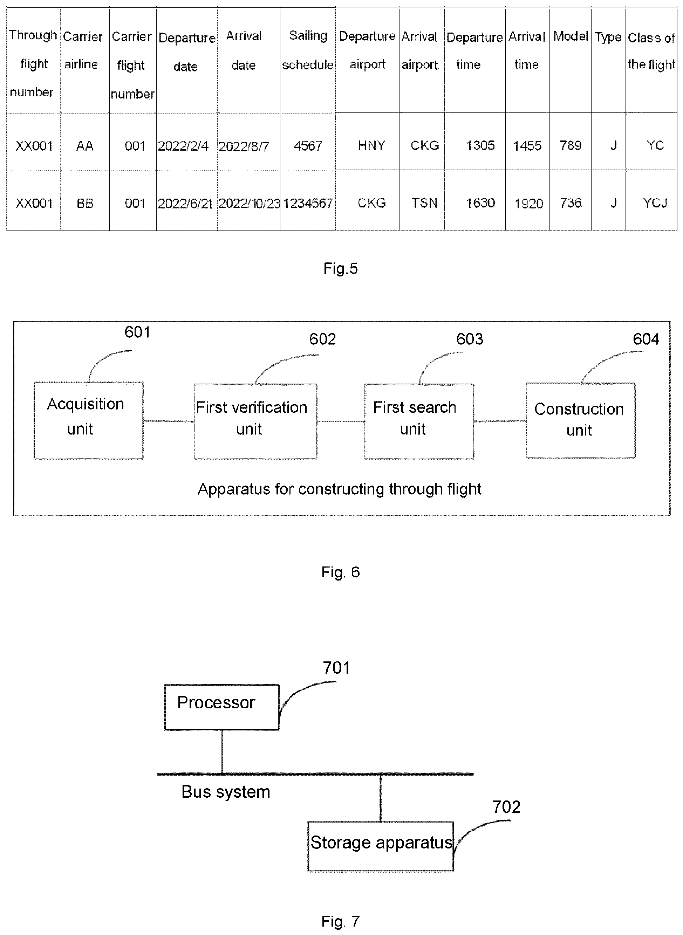

When the user queries the through flight information from Hengyang to Tianjin by means of input, the system retrieves a through flight database according to the index HNYTSN to query the generated through flight information. The through flight may be displayed in two modes. A first mode is similar to a display mode of a direct flight, and a further query may be made when it is necessary to view detailed information, as shown in Fig. 4. A second display mode is similar to a display mode of a connecting flight, as shown in Fig. 5.

In the above example, although each operation is described in a specific order, this should not be understood as requiring the operations to be executed in the specific order shown or in a sequential order. In a certain environment, multitasking and parallel processing may be advantageous.

It should be understood that various steps described in the method embodiment of the disclosure may be executed in different orders and/or in parallel. In addition, the method embodiment may include additional steps and/or the steps shown to omit execution. The scope of the disclosure is not limited in this regard.

In the examples of the disclosure, flow diagrams and block diagrams in the accompanying drawings illustrate system structures, functions and operations, which may be implemented according to systems, methods and computer program products in various examples of the disclosure. In this regard, each block in the flow diagrams or the block diagrams can represent a module, a program segment, or part of codes, which include one or more executable instructions configured to implement logical functions specified. It should also be noted that in some alternative implementations, functions noted in the blocks may also occur in sequences different from those in the accompanying drawings. For example, the functions represented by two continuous blocks can be actually implemented basically in parallel, and sometimes implemented in reverse sequences, which depends on the involved functions. It should also be noted that each block in the block diagrams and/or the flow diagrams, and combinations of the blocks in the flow diagrams and/or the block diagrams may be implemented by using dedicated hardware-based systems that implement the specified functions or operations, or may be implemented by using combinations of dedicated hardware and computer instructions.

An apparatus for constructing a through flight is further disclosed in another example of the disclosure. As shown in Fig. 6, the apparatus specifically includes:
an acquisition unit 601, configured to acquire through flight information issued by each airline, where the through flight information includes through flight route information and a through flight code sharing relation;
a first verification unit 602, configured to verify data of the through flight information to obtain valid through flight information;
a first search unit 603, configured to search out, based on the valid through flight information, direct flight information from a pre-constructed direct flight information base; and
a construction unit 604, configured to construct the through flight based on the direct flight information, and store the through flight into a through flight information base.

In the apparatus for constructing a through flight according to the example of the disclosure, the acquisition unit 601 acquires the through flight information issued by each airline, where the through flight information includes the through flight route information and the through flight code sharing relation. Then, the first verification unit 602 verifies the data of the through flight information to obtain the valid through flight information. Then, the first search unit 603 searches out, based on the valid through flight information, the direct flight information from the pre-constructed direct flight information base. Finally, the construction unit 604 constructs the through flight based on the direct flight information, and stores the through flight into the through flight information base. Thus, according to the method of the disclosure, the direct flight information can be searched out according to the acquired through flight information issued by each airline, thereby constructing the through flight. The through flight may improve accessibility between existing airports, give full play to a radiation effect of a hub airport, and achieve a service mode of "trunk and branch communication and full network connection". The problem that the prior art typically offers insufficient transit service products with low coordination efficiency, resulting in poor passenger experience is solved, and degree of satisfaction and sense of obtainment of passenger on a transit flight service are improved.

In the example, for specific execution processes of the acquisition unit 601, the first verification unit 602, the first search unit 603 and the construction unit 604, reference may be made to contents of the method example corresponding to Fig. 1, which will not be repeated herein.

The units described in the examples of the disclosure can be implemented in software or hardware. The names of the units do not constitute limitations to the units themselves in some cases. For example, the acquisition unit can further be described as a "unit for acquiring data".

Optionally, in another example of the disclosure, the apparatus for constructing a through flight may further include:
a storage unit, configured to store the valid through flight information into a database.

In the example, for a specific execution process of the storage unit, reference may be made to contents of the above corresponding method example, which will not be repeated herein.

Optionally, in another example of the disclosure, the apparatus for constructing a through flight may further include:
a second verification unit, configured to verify whether a flight query request conforms to a specification under the condition that the flight query request sent by a user is received;
a second search unit, configured to search out flight information based on the flight query request and generate a query result under the condition that the flight query request conforms to the specification; and
an ending unit, configured to end a flight query flow under the condition that the flight query request does not conform to the specification.

In the example, for specific execution processes of the second verification unit, the second search unit and the ending unit, reference may be made to contents of the above corresponding method example, which will not be repeated herein.

Optionally, in another example of the disclosure, the apparatus for constructing a through flight may further include:
a sorting unit, configured to sort the query result according to a preset rule to obtain a sorted query result; and
a sending unit, configured to send the sorted query result to the user.

In the example, for specific execution processes of the sorting unit and the sending unit, reference may be made to contents of the above corresponding method example, which will not be repeated herein.

An electronic device is further provided in another example of the disclosure. As shown in Fig. 7, the electronic device specifically includes:
one or more processors 701; and
a storage apparatus 702 storing one or more programs.

The one or more processors 701 implement any method in the above example when the one or more programs are executed by the one or more processors 701.

A computer storage medium is further provided in an example of the disclosure. The computer storage medium stores a computer program, and the computer program implements any method in the above example when executed by a processor.

It should be noted that in the context of the disclosure, the computer storage medium may be a tangible medium that may include or store a program for use by an instruction execution system, apparatus, or device or in combination with an instruction execution system, apparatus, or device. The computer storage medium may be a machine-readable signal medium or a machine-readable storage medium. The computer storage medium may include, but not limited to, an electronic, magnetic, optical, electromagnetic, infrared, or semiconductor system, apparatus, or device, or any suitable combination of the above. More specific examples of the computer storage medium may include an electrically connected and portable computer diskette based on one or more wires, a hard disk, a random access memory (RAM), a read-only memory (ROM), an erasable programmable read-only memory (EPROM or flash memory), an optical fiber, a portable compact disc read-only memory (CD-ROM), an optical storage device, a magnetic storage device, or any suitable combination of the above.

The computer storage medium described above may be included in the electronic device described above, or exist separately without being assembled into the electronic device.

A computer program product is provided in another example of the disclosure. The computer program product is configured to execute any method for constructing a through flight described above when executed.

Specifically, according to the example of the disclosure, the process described above with reference to the flow diagram can be implemented as a computer software program. For example, the example of the disclosure includes a computer program product including a computer program carried on a non-transitory computer-readable medium. The computer program includes program codes configured to execute the method shown in the flow diagram. In such an example, the computer program may be downloaded and installed from a network via a communication apparatus, or installed from a storage apparatus, or installed from the ROM. The computer program executes functions described above defined in the method of the example of the disclosure when executed by a processing apparatus.

Although the subject matter has been described in language specific to structural features and/or method logical actions, it should be understood that the subject matter defined in the appended claims may not necessarily be limited to the specific features or actions described above. On the contrary, the specific features and actions described above are merely exemplary forms to implement the claims.

Although several specific implementation details are included in the above discussion, these details should not be interpreted as limiting the scope of the disclosure. Certain features described in the context of a single example can further be implemented in a single example in a combined manner. On the contrary, various features described in the context of a single example can also be implemented in multiple examples separately or in an any suitable sub-combination manner.

What are described above are merely for illustration of the preferred examples of the disclosure and the technical principles used. It should be understood by those skilled in the art that the disclosed scope involved in the disclosure is not limited to the technical solution formed by a specific combination of the technical features described above, and should also cover other technical solutions formed by any combination of the technical features described above or equivalent features of the technical features without departing from the disclosed concept described above, for example, the technical solution formed by replacing the features described above with the technical features having similar functions disclosed in (but not limited to) the disclosure.

## Claims

1. A method for constructing a through flight, comprising:
acquiring through flight information issued by each airline, wherein the through flight information comprises through flight route information and a through flight code sharing relation;
verifying data of the through flight information to obtain valid through flight information;
searching out, based on the valid through flight information, direct flight information from a pre-constructed direct flight information base; and
constructing the through flight based on the direct flight information, and storing the through flight into a through flight information base.

2. The method according to claim 1, wherein after the verifying data of the through flight information to obtain valid through flight information, the method further comprises:
storing the valid through flight information into a database.

3. The method according to claim 2, wherein after the constructing the through flight based on the direct flight information, and storing the through flight into a through flight information base, the method further comprises:
verifying whether a flight query request conforms to a specification under the condition that the flight query request sent by a user is received;
searching out flight information based on the flight query request and generating a query result under the condition that the flight query request conforms to the specification; and
ending a flight query flow under the condition that the flight query request does not conform to the specification.

4. The method according to claim 3, wherein after the searching out flight information based on the flight query request and generating a query result, the method further comprises:
sorting the query result according to a preset rule to obtain a sorted query result; and
sending the sorted query result to the user.

5. An apparatus for constructing a through flight, comprising:
an acquisition unit, configured to acquire through flight information issued by each airline, wherein the through flight information comprises through flight route information and a through flight code sharing relation;
a first verification unit, configured to verify data of the through flight information to obtain valid through flight information;
a first search unit, configured to search out, based on the valid through flight information, direct flight information from a pre-constructed direct flight information base; and
a construction unit, configured to construct the through flight based on the direct flight information, and store the through flight into a through flight information base.

6. The apparatus according to claim 5, further comprising:
a storage unit, configured to store the valid through flight information into a database.

7. The apparatus according to claim 5, further comprising:
a second verification unit, configured to verify whether a flight query request conforms to a specification under the condition that the flight query request sent by a user is received;
a second search unit, configured to search out flight information based on the flight query request and generate a query result under the condition that the flight query request conforms to the specification; and
an ending unit, configured to end a flight query flow under the condition that the flight query request does not conform to the specification.

8. The apparatus according to claim 7, further comprising:
a sorting unit, configured to sort the query result according to a preset rule to obtain a sorted query result; and
a sending unit, configured to send the sorted query result to the user.

9. An electronic device, comprising:
one or more processors; and
a storage apparatus storing one or more programs, wherein
the one or more processors implement the method according to any one of claims 1-4 when the one or more programs are executed by the one or more processors.

10. A computer storage medium, storing a computer program, wherein the computer program implements the method according to any one of claims 1-4 when executed by a processor.
